# EUROPEAN PATENT SPECIFICATION

(11) **EP 1 388 391 B1**
(45) Date of publication and mention of the grant of the patent: **04.07.2007**
(21) Application number: 03017925.3
(22) Date of filing: 06.08.2003
(51) Int. Cl.: B23Q 7/14, B23Q 7/04, H02K 15/00, H02K 15/06

(54) **Pallet for handling electric motor armatures on automatic production lines**
Palette für den Transport von Armaturen von Elektromotoren in automatisierten Produktionslinien
Palette pour le transport d'un induit pour moteurs électriques dans une ligne de production automatique

(30) Priority: 06.08.2002 IT pi20020043
(43) Date of publication of application: 11.02.2004
(73) Proprietor: ATOP S.p.A., 50021 Barberino Val d'Elsa (Firenze) (IT)
(72) Inventor: Ponzio, Massimo, 50021 Barberino V.d'Elsa FI (IT)
(74) Representative: Celestino, Marco

(56) References cited:
- EP-A- 0 821 465
- EP-A- 0 822 030
- EP-A- 0 852 988
- EP-A- 0 982 242
- US-A- 5 685 413
- US-A- 6 098 974
- US-B1- 6 364 277

## Description

The present invention relates to equipment for automatic production lines of electric motor armatures and more precisely it relates to a mobile workpiece carrier, or pallet, having supports capable of holding armatures, which belong to a family of different sizes worked on such lines and of safely retaining them.

Furthermore, the invention relates to a method for carrying on a pallet armatures to be worked on.

### Background of the invention

Automatic production lines exist where the parts to be worked on are arranged on mobile workpiece carriers, hereinafter indicated as pallet, which hold them and carry them through one or several workstations. Typical parts to be worked on are electric motor armatures, which are made starting from a shaft on which an armature stack of star-shaped sheets is driven and eventually is wound with coils of lead wire.

More precisely, each pallet, that is initially located in a station of inlet for receiving an armature, proceeds on a conveyor belt that causes it to move selectively through the workstations. In each station, if necessary, the armature is offered to a machine that draws it from the pallet, works it and returns it again on the pallet that proceeds on the conveyor. During the working time of the workpiece in a station, the pallet continues to rest on the conveyor located underneath, for example a conveyor belt, in sliding contact on the belt same, or it can be raised or withdrawn from the conveyor belt, for example put in a waiting station. At the end of the work cycle, the pallet is withdrawn or maintained on the conveyor belt because it can proceed up to a next workstation.

Production lines that are not flexible exist, i.e. prepared to operate armatures having all the same size or armatures families of substantially alike size. In this case, at the start-up of the line the pallet are set for receiving that armatures and are not modified up to the end of all the working period. When the size of the armatures is modified in a substantial way, the line is stopped and both the pallet and the machines are set for receiving and working the new armatures.

For this reason, manually adjustable pallets exist, like those described in EP267324, that comprise fixed supports that can be adjusted and then blocked in a precise position for receiving the armature. A manually adjustable pallet of traditional type, requires that the supports are loosened, for example by means of screw coupling, in order to move them to a position in which they are then are locked to steadily support the armature.

When, instead, the machines in the various stations of the line are of flexible type, i.e. they can be adapted quickly to operate with armatures of different size, also the pallet, therefore, must be adjusted in real time not much before receiving each armature.

To this object pallets are known with automatically adjustable supports. For example, pallets of this type are described in EP348715, EP447805, and EP811463.

All these systems hold the armatures providing supports on which the free shaft ends rest.

In some cases, however, one of the shaft ends after winding is substantially hidden by the wire coil turns, and for this reason in cannot be put on onto the respective supports. EP 821465 has adjustable supports with multiple seats, including specific seats for supporting the commutator that can be hiding a shaft portion of the armatures to be transported

Furthermore, an adjustable pallet requires a station of automatic adjustment of the supports, or an operator that adjusts them manually.

Normally, automatic production lines work for families of workpieces of variable size within a predetermined range. The variable dimensions, in case of the armatures, are armature stack height, armature stack diameter, position of the armature stack and commutator on the shaft, shaft diameter, shaft length, shape of the shaft ends, etc.

Also a small variation of one or more of these parameters requires adjustment of the supports of the pallet, and leads to the choice of adjustable pallets according to the known systems.

A further drawback of the pallet of prior art is that they provide systems for holding the armature at the free shaft ends. For some types of armatures, however, after winding one of the shaft ends is substantially hidden by the coils of the wound wire, making it impossible to put both ends on the respective supports.

### Summary of the invention

It is therefore a feature of the present invention to provide a pallet for handling electric motor armatures on automatic production lines that is used for a whole family of armatures having size and shape different from one another without the need of adjustment of the supports neither automatic nor manual.

It is also a feature of the present invention to provide a pallet, for handling electric motor armatures on automatic production lines, which can eliminate possible backlash when accepting the armature in order to guarantee a precise location like the adjustable pallet of prior art and to be cost effective.

These and other features are accomplished with one exemplary pallet for handling electric motor armatures on automatic production lines, according to the invention, said armatures having an axis and comprising a plurality of portions having axial symmetry, in particular a shaft and an armature stack of ferromagnetic sheets driven on said shaft, whose characteristic is that it has a base on which suitable support means are mounted for engaging with at least one of said portions having axial symmetry and for keeping the armatures with axis substantially horizontal preventing it from moving during its transportation.

In exemplary embodiments of the pallet according to the invention according to apparatus claims 1 and method 10, the portion having axial symmetry engaged by the support means is the shaft of the armature, the support means comprising in this case a first and a second support capable of approaching and/or moving away from each other with respect to the armature axis at the moment of receiving and/or releasing a portion of the shaft.

Advantageously, said first and said second support means are capable of approaching and/or moving away from each other in a substantially axial direction with respect to the armature axis.

In a preferred exemplary embodiment, only either the first or the second support means move at the moment of receiving and/or releasing the armature axis whereas the second or first support means respectively remain still.

Advantageously, actuating means are provided, for example of pneumatic type, suitable for causing the mutual approaching and/or moving away of said first and said second support means.

In a possible exemplary embodiment, at least one of said support means has an elongated portion movable in a substantially axial direction suitable for engaging with the corresponding portion of the shaft of the armature. The elongated portion is capable of inserting in the space set between the coils and the armature shaft so that it can work used also in case of armatures having a portion of the shaft that is short and close to the armature stack of sheets.

In this case, the elongated portion of the support means can be connected to the actuating means with a releasable connection so that it can be replaced by one of different size.

In an alternative exemplary embodiment, said moving away stroke of said first and said second support means is biased by resilient means. Furthermore, the support means can have an end shaped in order to provide substantially a bevel that makes easier the location from the above of the armature on the pallet. This way, at the moment of positioning the armature on the pallet the support means are elastically forced to move away from each other to allow the armature to fit correctly. After positioning the resilient means urge the armature thus preventing it from moving during its transportation. At the moment of picking up the armature by gripping means at a workstation the embodiment above described allows in any case an easy manoeuvre. This way the pallet has substantially "self-adjusting" supports, i.e. capable of conforming and adapting automatically to the size of the transported armature shaft.

According to the invention, the exemplary embodiments above indicated allow to pick up the armature from the pallet either from the above or from below. In the latter case, the base has an opening to allow lifting means to pass.

The armatures are carried on the pallet holding them at said shaft by support means capable of approaching and/or moving away from each other with respect to the armature axis same at the moment of receiving and/or releasing a portion thereof.

The exemplary embodiments above described allow to make a pallet having high flexibility, i.e. capable of carrying armatures having different sizes.

Providing several support means in parallel, the pallet is capable of carrying a corresponding number of armatures.

### Brief description of the drawings

Further characteristics and advantages of the pallet for handling electric motor armatures on automatic production lines, according to the present invention, will be made clearer with the following description of possible exemplary embodiments, with reference to the attached drawings, in which like reference characters designate the same or similar parts throughout the figures of which:
- figure 1 shows a top plan view of an exemplary embodiments of a pallet according to the invention;
- figures 2 and 3 show in an elevational side view the pallet of figure 1 adapted to two different types of armatures;
- figure 4 shows an elevational front view of the pallet of figure 2;
- figure 5 shows an elevational front view partially cross sectioned of the pallet of figure 1 for highlighting the releasable connection between the elongated portion of the support and the stem of the actuating means;
- figure 6 shows a top plan view of the support means of figure 5 in detail;
- figures 7 and 8 show a partially cross sectioned elevational side view of the support means of figure 5 in two different positions of interaction with respect to the processed armature;

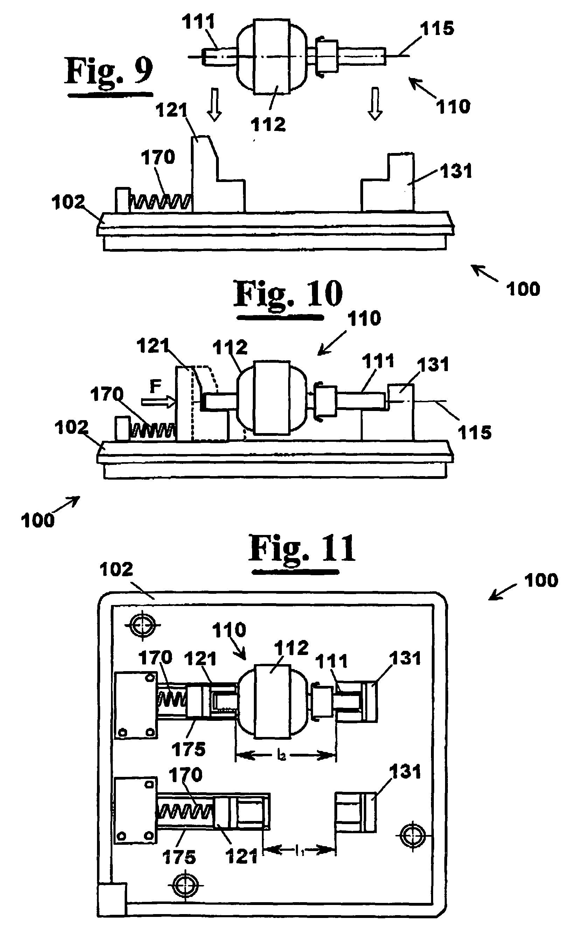

- figures 9 and 10 show diagrammatically an elevational side view of two positioning steps of an armature on a pallet according to an exemplary embodiment alternative to that of figure 1;
- figure 11 shows a top plan view of the pallet of figures 9 and 10.

### Description of a preferred exemplary embodiment

With reference to figures from 1 to 11 some exemplary embodiments are shown of a pallet, according to the invention. In this case the engagement of armature 110 by the support means is effected at the shaft 110 by means of a couple of supports 121 and 131 mounted on the basis 2 of pallet 100.

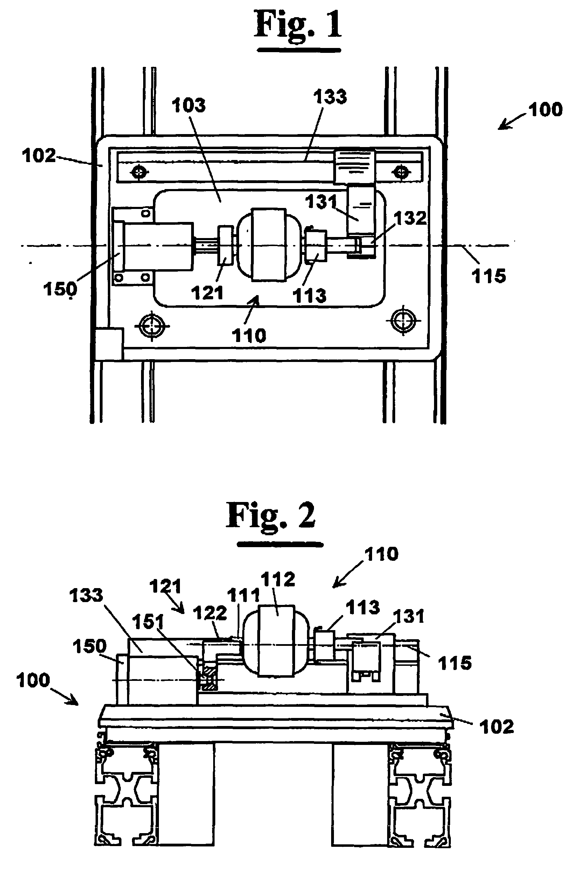

In particular, the supports 121 and 131 are capable of approaching and/or moving away from each other with respect to the axis 115 of armature 110 at the moment of receiving and/or releasing a portion of the shaft 111. More in detail, the support means 121 are movable along the axis 115 of armature 110 whereas the supports 131 are fixed, or alternatively, they can be arranged at a distance from the movable supports 121 but only in a preliminary step (figure 1-4). For example, in the case shown in figures from 1 to 4 a rod 133 is provided mounted on the basis 2 parallel to axis 115 of armature 110 on which a support arm 131 snap fits and is arranged at a predetermined distance from support 121.

At the moment of receiving armature 110 from the above, the supports 131 can then be used as reference by the gripping means, not shown, for positioning the corresponding shaft ends 111.

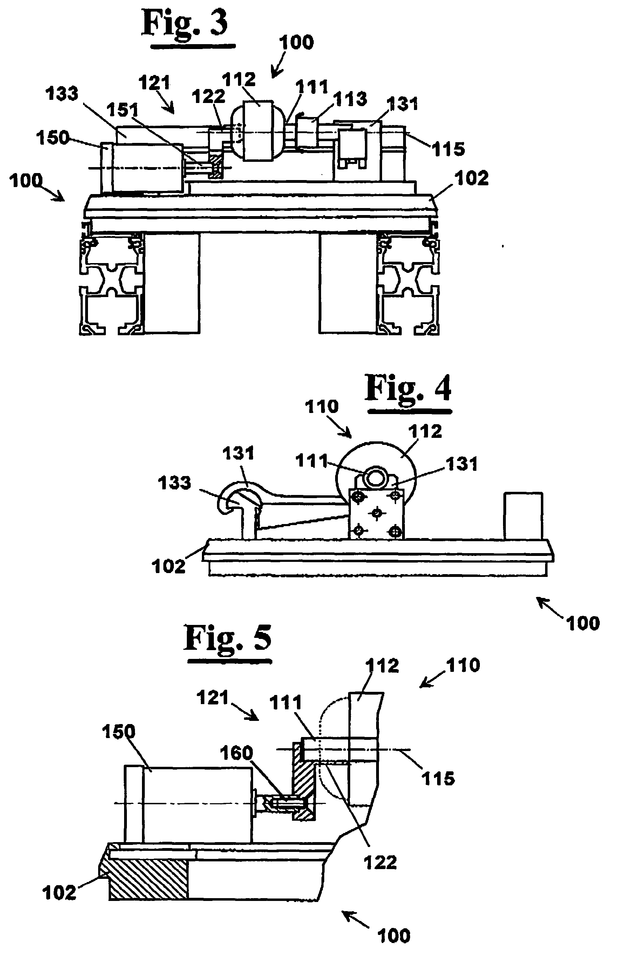

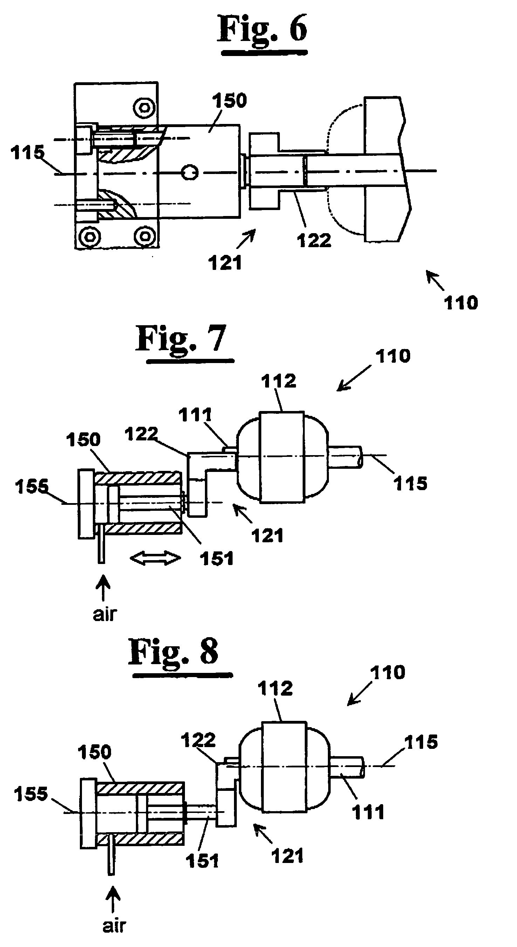

In the case shown in figures from 1 to 8 the supports 121 have an elongated portion 122 movable in a substantially axial direction with respect to armature 110 for engaging with the corresponding shaft ends 111. In particular, the elongated portion 122 enters the space set between the coils 112 and shaft 111 of armature 110 in order to offer a higher support surface to the shaft ends 111 of armature 110 that has to be held. This possibility allows using pallet 100 also for carrying armatures 110 having a portion of the shaft 111 hidden between the coils and the armature stack 112 (figures 5-8). The support 121 can be positioned with respect to armature 110 at the moment of receiving armature 110, or alternatively, a little time before, for example by actuators of pneumatic type 150 (figure 7 and 8). As shown in detail in figure 5 the elongated portion 122 of the support 121 can be connected to the actuating means 150 and in particular to a stem 151 movable along an axis 155 parallel with axis 115 of armature 110. This can be made by a releasable connection, for example by a screw 160, or a pin, etc., so that it can be replaced by one of different size for making pallet 100 more flexible.

In figures from 9 to 11 an exemplary embodiment is shown alternative to that above described in which the supports 121 and 131 can move away from each other biased by resilient means 170. In particular, the supports 121 and/or 131 can have an end shaped in order to provide substantially a bevel that makes easier the location from the above of armature 110 on pallet 100.

As shown in detail in figure 10, at the moment of positioning armature 110 on pallet 100 the movable supports 131 are elastically forced to move away from supports 121 to allow the armature 110 to fit correctly. In other words the distance between the supports 121 and 131 is self-adjusted in order to adapt to the length of the shaft 111 of armature 110. More in detail, the distance between the supports 121 and 131 changes from a starting value 11 to a value 12 depending on the length of shaft 111 of armature 110 (figure 11). Always with reference to figure 11, the relative movement between the supports 121 and 131 can be made mounting the supports 131, or also the supports 121, on guides 175.

Once armature 110 has been located onto the supports 121 and 131 the resilient means 170 create a locking force F on armature 110, thus preventing it from moving during its transportation. When armature 110 has to be picked up from pallet 100 by gripping means, not shown, in a workstation the embodiment above described allows, in any case, an easy manoeuvre.

The types of pallet provided by the present invention, as above described, allow to carry a wide variety of armatures with different size and structure along automatic production lines. Even if different exemplary embodiments have been described referred to the portion of the armature engaged by the support means, this does not exclude that the two exemplary embodiments of pallets can be adapted or combined with each other for engaging with desired portions of the armature.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Pallet (100) for handling electric motor armatures (110) on automatic production lines, said armatures having an axis and comprising a plurality of portions having axial symmetry, in particular a shaft (111) and an armature stack (112) of ferromagnetic sheets driven on said shaft, the pallet having a base (2) on which suitable support means (121, 131) are mounted for engaging with at least one of said portions (111) having axial symmetry and for keeping an armature with said axis substantially horizontal for preventing it from moving during its transportation; wherein said support means comprise at least one first and a second support means (121, 131) capable of approaching and/or moving away from each other in a substantially axial direction with respect to the armature axis; **characterized in that** it further comprises means (150, 170) carried by said pallet (100) for causing the mutual approaching and/or moving away of said first and said second support means (121, 131) at the moment of receiving and/or releasing a portion of said shaft.

2. Pallet, according to claim 1, wherein only said first or only said second support means (122) move at the moment of receiving and/or releasing the armature axis whereas said second or said first support means (131) respectively remains still.

3. Pallet, according to claim 1, wherein said means carried by said pallet (100) for causing the mutual approaching and/or moving away of said first and said second support means (121, 131) comprises actuators (150).

4. Pallet, according to claim 3, wherein said actuators (150) are of pneumatic type.

5. Pallet, according to claim 1, wherein said means carried by said pallet for causing the mutual approaching and/or moving away of said first and said second support means (121, 131) comprises spring means (170).

6. Pallet, according to claim 1, wherein at least one of said support means (121, 131) has an elongated portion (122) movable in a substantially axial direction suitable for engaging with the corresponding portion (111) of said shaft of said armature, said elongated portion being capable of inserting in the space set between the coils and said shaft (111) of the armature.

7. Pallet, according to claim 3 , wherein said elongated portion (122) of said support means is connected to said actuators (150) with a releasable connection (160) so that it can be replaced by one of different size.

8. Pallet, according to claim 1, wherein a moving away stroke of said first and said second support means (121, 131) is biased by resilient means (170).

9. Pallet, according to claim 1, wherein said support means (121, 131) have an end shaped in order to provide substantially a bevel that makes easier the location from the above of said armature (110) on said pallet (100).

10. Pallet, according to claim 1, wherein said base (2) is provided with at least one opening (103).

11. Method for handling electric motor armatures (110) on automatic production lines using a pallet (100) having first and a second support means (121, 131) said armatures having an axis and comprising a plurality of portions having axial symmetry, in particular a shaft (111) and an armature stack (112) of ferromagnetic sheets driven on said shaft, said armatures are carried on said pallet engaging with said support means, at least one of said portions having axial symmetry and maintaining the armatures with axis substantially horizontal for preventing the armatures from moving during their transportation **characterized in that** it further comprises the step of: causing, through means (150, 170) carried by said pallet (100), a mutual approaching and/or moving away from each other of at least one first and a second support means (121, 131) in a substantially axial direction with respect to the armature axis at the moment of receiving and/or releasing a portion of said shaft (111).

12. Method for handling armatures according to claim 11, wherein said pallet has the features claimed in claims from 2 to 10.

## Patentansprüche

1. Palette (100) zum Befördern von Bauteilen für Elektromotoren (110) auf automatischen Fertigungsanlagen, wobei die Bauteile über eine Achse verfügen, umfassend mehrere Teile mit Axialsymmetrie, insbesondere eine Welle (111) und einen Bauteilblock (112) aus ferromagnetischen Platten, der über die Achse angetrieben wird, wobei die Palette eine Grundfläche (2) aufweist, auf der geeignete Unterstützungsmittel (121, 131) befestigt sind, die mindestens einen der Teile (111) halten, die Axialsymmetrie aufweisen, sowie dafür sorgen, dass ein Bauteil mit dieser Achse vornehmlich horizontal gehalten wird, damit eine Bewegung während der Beförderung verhindert wird; wobei das Unterstützungsmittel mindestens ein erstes und ein zweites Unterstützungsmittel (121, 131) umfasst, die sich annähern und/oder voneinander entfernen können in eine vornehmlich axiale Richtung hinsichtlich der Bauteilachse; **dadurch gekennzeichnet, dass** die Palette weiterhin Mittel (150, 170) umfasst, die von der Palette (100) getragen werden, die das beiderseitige Annähern und/oder Entfernen des ersten und zweiten Unterstützungsmittels (121, 131) zu dem Zeitpunkt bewirken, zu dem ein Teil der Welle aufgenommen und/oder freigegeben wird.

2. Palette nach Anspruch 1, wobei sich nur das erste oder zweite Unterstützungsmittel (122) zu dem Zeitpunkt bewegt, zu dem die Bauteilachse aufgenommen und/oder freigegeben wird, und wobei das entsprechend zweite oder erste Unterstützungsmittel (131) fest steht.

3. Palette nach Anspruch 1, wobei das Mittel Auslöser (150) enthält, das von der Palette (100) getragen wird und das ein beiderseitiges Annähern und/oder ein Entfernen des ersten und des zweiten Unterstützungsmittels (121, 131) verursacht.

4. Palette nach Anspruch 3, wobei die Auslöser (150) pneumatischer Art sind.

5. Palette nach Anspruch 1, wobei das Mittel Federn (170) umfasst, das von der Palette getragen wird und das ein beiderseitiges Annähern und/oder ein Entfernen des ersten und des zweiten Unterstützungsmittels (121, 131) verursacht.

6. Palette nach Anspruch 1, wobei mindestens eines der Unterstützungsmittel (121, 131) einen verlängerten Teil (122) aufweist, der in eine vornehmlich axiale Richtung bewegt werden kann, so dass ein Kontakt mit dem entsprechenden Teil (111) der Welle des Bauteils möglich ist, wobei der verlängerte Teil in den Hohlraum zwischen den Spulen und der Welle (111) des Rotors eingeführt werden kann.

7. Palette nach Anspruch 3, wobei der verlängerte Teil (122) des Unterstützungsmittels über eine lösbare Verbindung (160) mit dem Auslöser (150) verbunden ist, und durch eine Verbindung anderer Größe ersetzt werden kann.

8. Palette nach Anspruch 1, wobei eine Bewegung des ersten und zweiten Unterstützungsmittels (121, 131) in ausgehende Richtung von einer Feder (170) vorgespannt wird.

9. Palette nach Anspruch 1, wobei die Unterstützungsmittel (121, 131) ein vornehmlich schräges Ende aufweisen, so dass die Platzierung der Unterstützungsmittel des Rotors (110) auf der Palette (100) vereinfacht wird.

10. Palette nach Anspruch 1, wobei die Grundfläche (2) mindestens eine Öffnung (103) aufweist.

11. Verfahren zum Befördern von Bauteilen für Elektromotoren (110) auf automatischen Fertigungsanlagen, mithilfe einer Palette (100), die ein erstes und zweites Unterstützungsmittel (121, 131) aufweist, wobei die Bauteile eine Achse aufweisen, und mehrere Teile mit Axialsymmetrie umfassen, insbesondere eine Welle (111) und einen Bauteilblock (112) aus ferromagnetischen Platten, der über die Welle angetrieben wird, wobei die Bauteile mittels der Palette befördert werden und in die Unterstützungsmittel eingreifen, wobei mindestens eines der Teile eine Axialsymmetrie aufweist und die Rotoren bezüglich ihrer Achse vornehmlich horizontal halten, um eine Bewegung der Bauteile während der Beförderung zu verhindern, **dadurch gekennzeichnet, dass** das Verfahren weiterhin den Schritt umfasst: Bewirken über Mittel (150,170), die von der Palette (100) getragen werden, einer beiderseitigen Annäherung und/oder eines Voneinanderentfernes von mindestens einem ersten und einem zweiten Unterstützungsmittel (121, 131) in eine vornehmlich axiale Richtung hinsichtlich der Bauteilachse zu dem Zeitpunkt, zu dem ein Teil der Welle (111) aufgenommen und/oder freigegeben wird.

12. Verfahren zum Befördern von Bauteilen nach Anspruch 1, wobei die Palette die Merkmale nach Anspruch 2 bis 10 aufweist.

## Revendications

1. Palette (100) pour manipuler des induits pour moteurs électriques (110) sur des lignes de production automatiques, lesdits induits ayant un axe et comprenant une pluralité de parties ayant une symétrie axiale, en particulier un arbre (111) et un pilier d'induit (112) de feuilles ferromagnétiques entraînées sur ledit arbre, la palette ayant une base (2) sur laquelle des moyens de support appropriés (121, 131) sont montés pour un engagement avec au moins une desdites parties (111) ayant une symétrie axiale et pour maintenir un induit avec ledit axe sensiblement horizontal pour l'empêcher de se déplacer pendant son transport ; dans laquelle lesdits moyens de support comprennent au moins un premier et un deuxième moyen de support (121, 131) capables d'approcher et / ou de s'éloigner l'un de l'autre dans une direction sensiblement axiale par rapport à l'axe d'induit ; **caractérisée en ce qu'**elle comprend en outre des moyens (150, 170) portés par ladite palette (100) pour entraîner le rapprochement et / ou l'éloignement mutuel dudit premier et dudit deuxième moyens de support (121, 131) au moment de la réception et / ou de la relâche d'une partie dudit arbre.

2. Palette selon la revendication 1, dans laquelle seulement ledit premier ou seulement ledit deuxième moyen de support (122) se déplace au moment de la réception et / ou de la relâche de l'axe d'induit tandis que ledit deuxième ou ledit premier moyen de support (131) reste respectivement fixe.

3. Palette selon la revendication 1, dans laquelle lesdits moyens portés par ladite palette (100) pour entraîner le rapprochement et / ou l'éloignement mutuel dudit premier et dudit deuxième moyen de support (121, 131) comprennent des actionneurs (150).

4. Palette selon la revendication 3, dans laquelle lesdits actionneurs (150) sont du type pneumatique.

5. Palette selon la revendication 1, dans laquelle lesdits moyens portés par ladite palette pour entraîner le rapprochement et / ou l'éloignement mutuel dudit premier et dudit deuxième moyen de support (121, 131) comprennent des moyens de ressort (170).

6. Palette selon la revendication 1, dans laquelle au moins un desdits moyens de support (121, 131) a une partie allongée (122) mobile dans une direction sensiblement axiale appropriée pour un engagement avec la partie correspondante (111) dudit arbre dudit induit, ladite partie allongée étant capable d'insertion dans l'espace réglé entre les bobines et ledit arbre (111) de l'induit.

7. Palette selon la revendication 3, dans laquelle ladite partie allongée (122) desdits moyens de support est connectée audit actionneurs (150) avec une connexion détachable (160) de telle sorte qu'elle peut être remplacée par une partie de taille différente.

8. Palette selon la revendication 1, dans laquelle une course d'éloignement dudit premier et dudit deuxième moyen de support (121, 131) est sollicitée par des moyens résilients (170).

9. Palette selon la revendication 1, dans laquelle lesdits moyens de support (121, 131) ont une extrémité formée afin de produire sensiblement un biseau qui rend plus facile le placement depuis le dessus dudit induit (110) sur ladite palette (100).

10. Palette selon la revendication 1, dans laquelle ladite base (2) est munie d'au moins une ouverture (103).

11. Procédé pour manipuler des induits pour moteurs électriques (110) sur des lignes de production automatiques en utilisant une palette (100) ayant un premier et un deuxième moyens de support (121, 131), lesdits induits ayant un axe et comprenant une pluralité de parties ayant une symétrie axiale, en particulier un arbre (111) et un pilier d'induit (112) de feuilles ferromagnétiques entraînées sur ledit arbre, lesdits induits sont portés sur ladite palette s'engageant avec lesdits moyens de support, au moins une desdites parties ayant une symétrie axiale et maintenant les induits avec l'axe sensiblement horizontal pour empêcher les induits de se déplacer pendant leur transport, **caractérisé en ce qu'**il comprend en outre l'étape suivante : entraîner, par le biais de moyens (150, 170) portés par ladite palette (100), un rapprochement et / ou un éloignement mutuel l'un de l'autre d'au moins un premier et un deuxième moyens de support (121, 131) dans une direction sensiblement axiale par rapport à l'axe de l'induit au moment de la réception et / ou de la relâche d'une partie dudit arbre (111).

12. Procédé de manipulation d'induits selon la revendication 11, dans lequel ladite palette a les caractéristiques revendiquées dans les revendications 2 à 10.
